# EUROPÄISCHE PATENTSCHRIFT

(11) **EP 0 770 333 B1**
(45) Veröffentlichungstag und Bekanntmachung des Hinweises auf die Patenterteilung: **12.07.2000**
(21) Anmeldenummer: 96117419.0
(22) Anmeldetag: 30.10.1996
(51) Int. Cl.: A23G 9/30

(54) **Fluidlebensmittel-Kühl-Erhitzungsvorrichtung**
Heating- and cooling apparatus for fluid food product
Dispositif de refroidissement et chauffage d'aliment fluide

(30) Priorität: 31.10.1995 DE 29517253 U
(43) Veröffentlichungstag der Anmeldung: 02.05.1997
(73) Patentinhaber: Telme S.P.A., 26845 Codogno (IT)
(72) Erfinder: Cigolini, Aldo, 2070 Fombio (MI) (IT)
(74) Vertreter: Thul, Stephan

(56) Entgegenhaltungen:
- DE-A- 2 943 052
- DE-U- 29 517 253
- FR-A- 978 237
- FR-A- 2 323 329
- FR-A- 2 552 634
- FR-A- 2 624 589
- US-A- 2 481 469
- DATABASE WPI Week 8639 Derwent Publications Ltd., London, GB; AN 86-254724 XP002023929 & JP 61 181 343 A (SANYO ELECTRIC) , 14.August 1986

## Beschreibung

Die Erfindung betrifft eine Fluidlebensmittel-Kühl-Erhitzungsvorrichtung mit einem vorzugsweise kreiszylindrischen oder einen rechteckigen Querschnitt aufweisenden Topf, dessen Seitenwände und/oder dessen Boden mit einer ein Temperierungsfluid führenden Temperierungsleitungsanordnung in Wärmeleitungskontakt stehen, welche über Zufuhr- und Abfuhrleitungen an eine mit Verdampfer, Kompressor und Kondensator versehene Kühlvorrichtung angeschlossen ist, die vom Temperierungsfluid aus dem Topf aufgenommene Wärme abführt.

Derartige kombinierte Kühl-Erhitzungsvorrichtungen werden verwendet, um in Fluidform vorliegende Lebensmittel beispielsweise eine Speiseeismasse zunächst zu pasteurisieren und dann im gleichen Topf daraus Speiseeis herzustellen. Auch beim Herstellen von Cremes ist es erforderlich, die Cremmasse zunächst zum Kochen zu erhitzen und anschließend abzukühlen.

FR 978 237 A (L. CAVALLERI) beschreibt eine für Fluidlebensmittel geeignete Temperierungsvorrichtung, die jedoch weder gleichzeitig eine Kühl- und Heizvorrichtung noch mehrere separate, übereinander am Topf angebrachte Temperierungsschlangenabschnitte umfaßt.

FR 2 624 589 A (D. GEHANT ET AL.) befaßt sich mit einer Vorrichtung zum abwechselnden Kühlen und Erhitzen, beispielsweise von Lebensmittelautomaten, mittels eines einzigen Temperierungsfluidkreislaufs, enthält jedoch keine Angaben zur Temperierung eines für Fluidlebensmittel geeigneten Topfes.

Das Ziel der vorliegenden Erfindung besteht darin, eine Fluidlebensmittel-Kühl-Erhitzungsvorrichtung der eingangs genannten Gattung zu schaffen, welche mit einem möglichst geringen Leitungsaufwand auskommt und eine besonders wirkungsvolle Erhitzung und Abkühlung im Wechsel zuläßt.

Zur Lösung dieser Aufgabe sieht die Erfindung vor, daß der Verdampfer Bestandteil eines eines Wärmetauschers ist, der außerdem eine einen Einlaß und einen Auslaß aufweisende Kanalanordnung enthält, die in Wärmetauschbeziehung mit dem Verdampfer steht, deren Einlaß mit der Abfuhrleitung und deren Auslaß mit der Zufuhrleitung verbunden ist, und daß in dem so vervollständigten Temperierungsfluidkreislauf eine Umwälzpumpanordnung und eine Heizvorrichtung eingeschaltet sind.

Der Erfindungsgedanke ist also darin zu sehen, daß die am Topf vorgesehene Temperierungsleitungsanordnung, die bevorzugt aus einem Leitungsschlangensystem besteht, abwechselnd zur Erhitzung und zur Kühlung benutzt werden kann. Es wird somit für beide Zwecke nur ein einziges Leitungssystem benötigt, was nicht nur die Einsparung von Rohr- oder Schlauchleitungen bedeutet, sondern auch zu einem wirksameren Wärmekontakt zwischen dem Fluidlebensmittel und dem Temperierungsfluid führt, weil ein einziges Temperierungsleitungssystem wesentlich effektiver am Topf angeordnet werden kann als zwei separate Temperierungsleitungsanordnungen.

Vorteilhafte Weiterbildungen der Erfindung sind durch die Unteransprüche gekennzeichnet.

Besonders bevorzugt ist es, wenn die Heizvorrichtung möglichst nahe dem Übergang von der Zufuhrleitung in die Temperierungsleitungsanordnung in die Zufuhrleitung eingeschaltet ist, weil hierdurch die Wärmeverluste in den Leitungen minimiert werden.

Besonders vorteilhaft ist es, wenn die Temperierungsleitungsanordnung aus mehreren übereinander am Topf angeordneten Temperierungsschlangenabschnitten besteht, die jeweils einen Eingang und einen Ausgang aufweisen, welche parallel an die Zufuhrleitung bzw. Abfuhrleitung angeschlossen sind. Hierbei soll insbesondere vorgesehen sein, daß zwischen die Zufuhrleitung und die Eingänge der Temperierungsschlangenabschnitte einerseits und/oder die Ausgänge der Temperierungsschlangenabschnitte und die Abfuhrleitung jeweils ein Temperierungsfluidverteiler geschaltet ist. Auf diese Weise wird ein zu starkes Temperaturgefälle in Vertikalrichtung des Topfes vermieden.

Ein weiterer Vorteil wird erzielt, wenn der Temperierungsfluidstrom für jeden Temperierungsschlangenabschnitt separat ein- bzw. abschaltbar ist.

Auf diese Weise kann beispielsweise bei nicht vollständiger Füllung oder abnehmender Füllung des Topfes dafür gesorgt werden, daß die Temperierung im oberen, nicht vom Fluidlebensmittel eingenommenen Raum abgeschaltet wird, so daß es dort beispielsweise im Falle einer Kühlung nicht zu einer Kondensation von Luftfeuchtigkeit oder bei einer Erhitzung zum Anbacken des unter Umständen völlig getrockneten Lebensmittels kommt.

Grundsätzlich könnte für jeden Temperierungsschlangenabschnitt eine eigene und separat schaltbare Pumpe vorgesehen sein, welche jeweils in eine eigene Zuleitung und/oder Ableitung der Temperierungsschlangenabschnitte eingeschaltet ist.

Bevorzugt ist es jedoch, wenn jeder Temperierungsschlangenabschnitt eine eigene Zuleitung und/oder Ableitung aufweist und daß in jede Zuleitung und/oder in jede Ableitung ein Schließventil eingeschaltet ist. Auf diese Weise können die einzelnen Temperierungsschlangenabschnitte mit ein und derselben Pumpe wahlweise beaufschlagt werden oder nicht.

Eine vorteilhafte Weiterbildung sieht vor, daß die Schließventile in Abhängigkeit von dem Lebensmittelfluidstand in dem Topf schließbar sind.

Hierbei soll insbesondere vorgesehen sein, daß eine Füllstandsmeßvorrichtung für den Fluidstand im Topf vorgesehen ist, welche die Schließventile steuert.

Auf diese Weise kann insbesondere vollautomatisch der Füllstand des Topfes bei der Kühlung oder Erhitzung berücksichtigt werden.

Eine vorteilhafte Weiterbildung der Erfindung sieht vor, daß mehrere, vorzugsweise zwei Töpfe über jeweils einen eigenen Wärmetauscher an eine gemeinsame Kühlvorrichtung angeschlossen sind. Hierbei soll insbesondere vorgesehen sein, daß der Kühlmittelzulauf zu jedem Wärmetauscher separat absperrbar ist.

Mit einem einzigen Kühlmittelkreislauf können somit zwei Töpfe parallel beaufschlagt werden, die jedoch jeweils einen eigenen Heizkreislauf besitzen. Auf diese Weise muß die wesentlich kostspieligere Kühlvorrichtung nur einmal vorgesehen werden, während die weniger aufwendige Heizvorrichtung in jedem Einzelkreislauf separat vorhanden ist.

Der Topf der erfindungsgemäßen Vorrichtung kann Bestandteil eines Cremekochers, einer Pasteurisierungsvorrichtung oder einer Speiseeismaschine sein, wie sie beispielsweise in der EP 0 596 221 A1 beschrieben ist.

Die Erfindung wird im folgenden beispielsweise anhand der Zeichnung beschrieben; in dieser zeigt
- Figur 1: eine schematische, teilweise geschnittene blockschaltbildartige Darstellung einer ersten Ausführungsform einer erfindungsgemäßen Fluidlebensmittel-Kühl-Erhitzungsvorrichtung,
- Figur 2: eine entsprechende Darstellung einer weiteren Ausführungsform und
- Figur 3: eine entsprechende Darstellung einer Ausführungsform mit zwei zu erhitzenden bzw. zu kühlenden Töpfen.

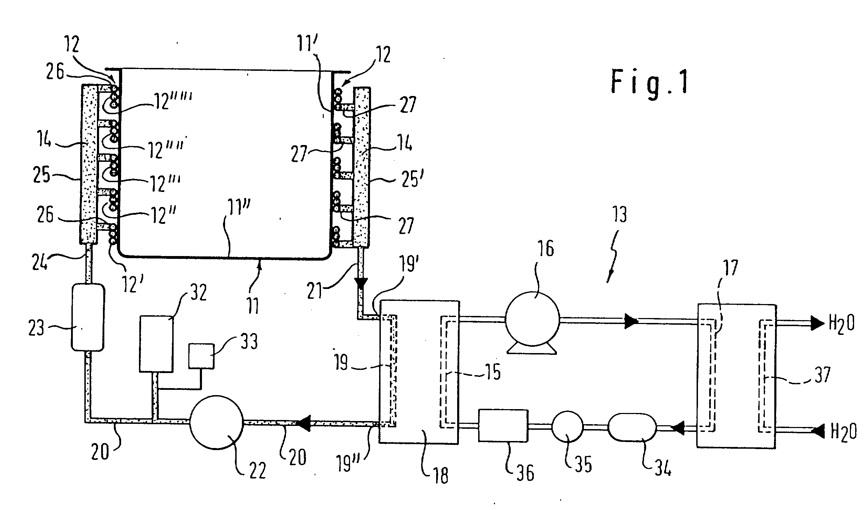

Nach Figur 1 ist ein beispielsweise mit einer Speiseeismasse, einer Creme oder einem sonstigen fluiden Lebensmittel zu befüllender, eine zylindrische oder einen rechteckigen Horizontalquerschnitt aufweisende Umfangswand 11' und einen flachen Boden 11'' aufweisender Topf 11, der oben offen ist, dort jedoch mit einem Deckel verschlossen werden kann, von einer Temperierungsleitungsanordnung 12 umgeben, die aus mehreren im geringen Abstand übereinander angeordneten Temperierungsschlangenabschnitten 12', 12'', 12''', 12'''' und 12''''' besteht. Jeder Temperierungsschlangenabschnitt 12', 12'', 12''', 12'''', 12''''' weist einen Eingang 26 und einen Ausgang 27 auf, die jeweils an einen Temperierungsfluidverteiler 25 bzw. 25' angeschlossen sind. In den Verteilern 25, 25' und der Temperierungsleitungsanordnung 12 befindet sich ein Temperierungsfluid 14 wie beispielsweise Glykol.

Vom Ausgangs-Temperierungsfluidverteiler 25' verläuft eine Abfuhrleitung 21 zum Einlaß 19' einer Kanalanordnung 19, die Bestandteil eines Wärmetauschers 18 ist.

An den Auslaß 19'' der Kanalanordnung 19 ist eine Zufuhrleitung 20 zum Eingangs-Temperierungsfluidverteiler 25 angeschlossen, in welche hintereinander eine Umwälzpumpe 22 und eine Heizvorrichtung 23 eingeschaltet sind. An den Leitungsabschnitt zwischen der Umwälzpumpe 22 und der Heizvorrichtung 23 sind eine Temperierungsfluidspeisevorrichtung 32 und ein Sicherheitsdruckschalter 33 angeschlossen.

Die Umwälzpumpe 22 wälzt das z. B. aus Glykol bestehende Temperierungsfluid 14 in dem Kreislauf 12, 25', 21, 19, 20, 23, 25 um.

Der Wärmetauscher 18 enthält außer der vom Temperierungsfluid 14 durchströmten Kanalanordnung 19 den mit letzterer in Wärmetauschkontakt stehenden Verdampfer 15 einer Kühlvorrichtung 13, die im Anschluß an den Ausgang des Verdampfers 15 einen Kompressor 16, einen Kondensator 17 sowie ein Filter 34, ein Schauglas 35 und ein Thermostatventil 36 aufweist, welches zur Schließung des Kühlkreislaufes mit dem Eingang des Verdampfers 15 in Verbindung steht. Der Kondensator 17 steht in einer Wärmetauschbeziehung mit einer von Kühlwasser gespeisten Kühlkanalanordnung 37.

Im Topf 11 normalerweise angeordnete Rühr- oder Schabwerkzeuge sind nicht dargestellt.

Die nicht dargestellte elektrische Schaltung der beschriebenen Fluidlebensmittel-Kühl-Erhitzungsvorrichtung sieht vor, daß zu einer Zeit entweder nur die Kühlvorrichtung 13 oder die Heizvorrichtung 23 eingeschaltet ist.

Soll im Topf 11 beispielsweise eine Creme gekocht werden, so wird die Crememasse in den Topf 11 eingefüllt, und es werden die Umwälzpumpe 22 und die Heizvorrichtung 23 eingeschaltet, wodurch die im Topf 11 enthaltene Creme gegebenenfalls unter Rühren die gewünschte Temperatur von z. B. 90°C annimmt. Nach Fertigstellung der Creme bzw. nach Ablauf der für die antibakterielle Wirkung der Erhitzung erforderlichen Zeit wird die Heizvorrichtung 23 abgeschaltet, während aber die Umwälzpumpe 22 weiterläuft. Nunmehr wird die Kühlvorrichtung 13 in Betrieb gesetzt, worauf über den Wärmetauscher 18 das Temperierungsfluid 14 und damit die Masse im Topf 11 beispielsweise auf unter 6°C, insbesondere etwa 2°C gekühlt wird. Nunmehr ist auch die Pasteurisierung der Creme abgeschlossen.

Bei der Ausführungsform nach Fig. 1 ist die Heizvorrichtung 23 nahe am Übergang 24 von der Zufuhrleitung 20 zum Eingangs-Temperierungsfluidverteiler 25 eingeschaltet, wodurch Wärmeverluste minimiert werden.

In den folgenden Ausführungsbeispielen bezeichnen gleiche Bezugszahlen entsprechende Bauelemente wie in Fig. 1.

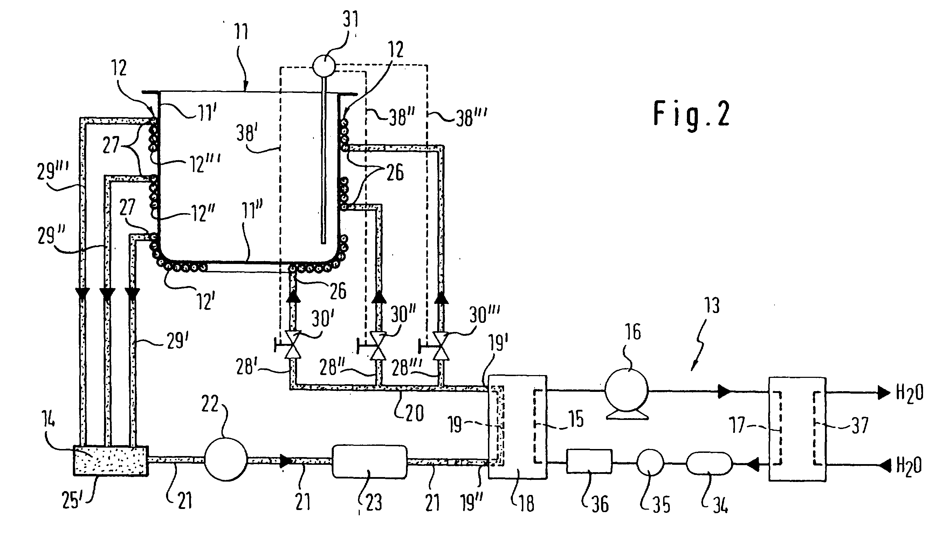

Die Ausführungsform nach Fig. 2 unterscheidet sich nach der von Fig. 1 zunächst dadurch, daß die Umwälzpumpe 22 und die Heizvorrichtung 23 in der Abfuhrleitung 21 vor der Kanalanordnung 19 im Wärmetauscher 18 angeordnet sind.

Weiter sind im Gegensatz zu den fünf übereinander angeordneten Temperierungsschlangenabschnitten nach Fig. 1 nur drei Temperierungsschlangenabschnitte 12', 12'' und 12''' im Abstand übereinander angeordnet, wobei der untere Temperierungsschlangenabschnitt 12' auch um den Boden 11'' des Topfes 11 herumgreift. Jeder Temperierungsschlangenabschnitt 12', 12'', 12''' ist mittels seines Einganges 26 über separate Zuleitungen 28', 28'', 28''' und in die Zuleitungen 28', 28'', 28''' eingeschaltete steuerbare Schließventile 30', 30'' bzw. 30''' an die Zufuhrleitung 20 angeschlossen.

Die Ausgänge 27 der Temperierungsschlangenabschnitte 12', 12'', 12''' sind ebenfalls über separate Ableitungen 29', 29'', 29''' an den Ausgangs-Temperierungsfluidverteiler 25' angeschlossen, welcher über einen Abschnitt der Abfuhrleitung 21 mit der Umwälzpumpe 22 verbunden ist.

Am Topf 11 ist außerdem eine nur schematisch angedeutete Füllstandsmeßvorrichtung 31 vorgesehen, die über Steuerleitungen 38', 38'' bzw. 38''' mit nicht dargestellten Betätigungsvorrichtungen für die Schließventile 30', 30'' bzw. 30''' in Verbindung steht.

Die Arbeitsweise der Ausführungsform nach Fig. 2 ist wie folgt:

Sofern der Topf 11 vollständig beispielsweise mit einer zu kochenden Creme gefüllt ist, sind sämtliche drei Schließventile 30', 30'', 30''' geöffnet, so daß beispielsweise im Heizzyklus geheiztes Temperierungsfluid 14 durch die Temperierungsschlangenabschnitte 12', 12'', 12''' umgewälzt wird. Auf diese Weise wird die Creme gekocht.

Sinkt durch Verdampfung von Flüssigkeit der Fluidstand im Topf 11 unter den obersten Temperierungsschlangenabschnitt 12''' ab, so stellt dies die Füllstandsmeßvorrichtung 31 fest und schließt das Schließventil 30''' ab, so daß der obere Bereich des Topfes 11 nicht mehr geheizt wird und es dort nicht zum Anbacken von getrockneter Creme kommt.

Während des anschließenden Kühlzyklus, der auch die spätere Aufbewahrung der fertigen Creme umfaßt, wird der obere Temperierungsschlangenabschnitt 12''' oder es werden die beiden Temperierungsschlangenabschnitte 12'', 12''' durch Schließen des Schließventils 30''' oder beider Schließventile 30'', 30''' nicht mehr vom Temperierungsfluid 14 durchströmt, so daß es in diesen Bereichen nicht zum Niederschlagen von Kondenswasser aus der Luft und damit zu unerwünschter Eisbildung kommt.

Die Heizvorrichtung 23 soll möglichst nahe am Wärmetauscher 18 angeordnet sein.

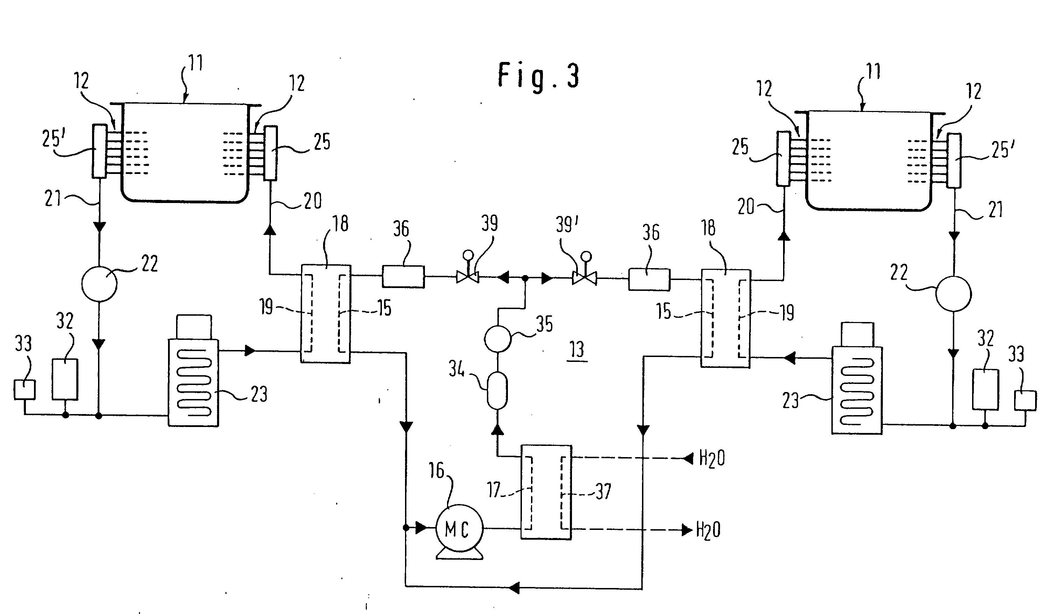

Bei der Ausführungsform nach Fig. 3 sind zwei Töpfe 11 mit eigener Temperierungsleitungsanordnung 12, eigenen Eingangs- und Ausgangstemperierungsfluidverteilern 25, 25', eigenen Zufuhr- und Abfuhrleitungen 20, 21, eigenen Umwälzpumpen 22, eigenen Heizvorrichtungen 23 sowie eigenen Temperaturfluidspeisevorrichtungen 32 und Sicherheitsdruckschaltern 33 sowie eigenen Wärmetauschern 18 vorgesehen.

Für beide Heizkreisläufe ist jedoch eine einzige Kühlvorrichtung 13 vorgesehen, welche jedoch im Anschluß an das Schauglas 35 über unabhängig voneinander schaltbare Ventile 39, 39' und separate Thermostatventile 36 an jeweils einen eigenen Verdampfer 15 in den beiden Wärmetauschern 18 angeschlossen sind.

Auf diese Weise können der gleiche Kompressor 16 und der gleiche Kondensator 17 zur Kühlung entweder nur des einen oder des anderen oder beider Behälter 11 verwendet werden.

### BEZUGSZEICHENLISTE

- 11: Topf
- 11': Seitenwand
- 11'': Boden
- 12: Temperierungsleitungsanordnung
- 12': Temperierungsschlangenabschnitt
- 12": Temperierungsschlangenabschnitt
- 12'": Temperierungsschlangenabschnitt
- 12"": Temperierungsschlangenabschnitt
- 12"'": Temperierungsschlangenabschnitt
- 13: Kühlvorrichtung
- 14: Temperierungsfluid
- 15: Verdampfer
- 16: Kompressor
- 17: Kondensator
- 18: Wärmetauscher
- 19: Kanalanordnung
- 19': Einlaß
- 19'': Auslaß
- 20: Zufuhrleitung
- 21: Abfuhrleitung
- 22: Umwälzpumpe
- 23: Heizvorrichtung
- 24: Übergang
- 25: Eingangs-Temperierungsfluidverteiler
- 25': Ausgangs-Temperierungsfluidverteiler
- 26: Eingang
- 27: Ausgang
- 28': Zuleitung
- 28": Zuleitung
- 28''': Zuleitung
- 29': Ableitung
- 29'': Ableitung
- 29"': Ableitung
- 30': Schließventil
- 30'': Schließventil
- 30''': Schließventil
- 31: Füllstandsmeßvorrichtung
- 32: Temperierungsfluidspeisevorrichtung
- 33: Sicherheitsdruckschalter
- 34: Filter
- 35: Schauglas
- 36: Thermostatventil
- 37: Kühlkanalanordnung
- 38': Steuerleitung
- 38": Steuerleitung
- 38''': Steuerleitung
- 39: Ventil
- 39': Ventil

## Patentansprüche

1. Fluidlebensmittel-Kühl-Erhitzungsvorrichtung mit einem vorzugsweise kreiszylindrischen oder einen rechteckigen Querschnitt aufweisenden Topf (11), dessen Seitenwände (11') und/oder dessen Boden (11") mit einer ein Temperierungsfluid (14) führenden Temperierungsleitungsanordnung (12) in Wärmeleitungskontakt stehen, welche über Zufuhr- und Abfuhrleitungen (20, 21) an einen Temperierungsfluidkreislauf (12, 19, 20, 21) mit Umwälzpumpanordnung (22) und einer mit Verdampfer (15), Kompressor (16) und Kondensator (17) versehenen Kühlvorrichtung (13) angeschlossen ist, die vom Temperierungsfluid (14) aus dem Topf (11) aufgenommene Wärme abführt,
dadurch **gekennzeichnet,**
daß der Verdampfer (15) Bestandteil eines Wärmetauschers (18) ist, der außerdem eine einen Einlaß (19') und einen Auslaß (19") aufweisende Kanalanordnung (19) enthält, die in Wärmetauschbeziehung mit dem Verdampfer (15) steht, deren Einlaß (19') mit der Abfuhrleitung (21) und deren Auslaß (19") mit der Zufuhrleitung (20) verbunden ist, daß in dem Temperierungsfluidkreislauf (12, 19, 21, 21) eine im Wechsel mit der Kühlvorrichtung (13) einschaltbare Heizvorrichtung (23) eingeschaltet ist, und daß die Temperierungsleitungsanordnung (12) aus mehreren übereinander am Topf (11) angeordneten Temperierungsschlangenabschnitten (12', 12", 12"', 12"", 12""') besteht, die jeweils einen Eingang (26) und einen Ausgang (27) aufweisen, welche parallel an die Zufuhrleitung (20) bzw. Abfuhrleitung (21) angeschlossen sind.

2. Vorrichtung nach Anspruch 1,
dadurch **gekennzeichnet,**
daß die Umwälzpumpanordnung (22) in die Abfuhrleitung (21) oder vorzugsweise in die Zufuhrleitung (20) eingeschaltet ist.

3. Vorrichtung nach Anspruch 1 oder 2,
dadurch **gekennzeichnet,**
daß die Heizvorrichtung (23) in die Abfuhrleitung (21) oder vorzugsweise die Zufuhrleitung (20) eingeschaltet ist.

4. Vorrichtung nach Anspruch 2 und 3,
dadurch **gekennzeichnet,**
daß die Heizvorrichtung (23) stromabwärts von der Umwälzpumpanordnung (22) in die Zufuhrleitung (20) eingeschaltet ist.

5. Vorrichtung nach einem der vorhergehenden Ansprüche,
dadurch **gekennzeichnet,**
daß die Heizvorrichtung (23) möglichst nahe dem Übergang von der Zufuhrleitung (20) in die Temperierungsleitungsanordnung (12) in die Zufuhrleitung (20) eingeschaltet ist.

6. Vorrichtung nach einem der vorhergehenden Ansprüche,
dadurch **gekennzeichnet,**
daß zwischen die Zufuhrleitung (20) und die Eingänge (26) der Temperierungsschlangenabschnitte (12', 12", 12"', 12"", 12""') einerseits und/oder die Ausgänge (27) der Temperierungsschlangenabschnitte (12', 12", 12"', 12"", 12""') und die Abfuhrleitung (21) jeweils ein Temperierungsfluidverteiler (25) geschaltet ist.

7. Vorrichtung nach einem der vorhergehenden Ansprüche,
dadurch **gekennzeichnet,**
daß der Temperierungsfluidstrom für jeden Temperierungsschlangenabschnitt (12', 12", 12"', 12"", 12""') separat ein- bzw. abschaltbar ist.

8. Vorrichtung nach Anspruch 7,
dadurch **gekennzeichnet,**
daß jeder Temperierungsschlangenabschnitt (12', 12", 12"', 12"", 12""') eine eigene Zuleitung (28', 28", 28"') und/oder Ableitung (29', 29", 29"') aufweist und daß in jede Zuleitung (28', 28", 28"') und/oder in jede Ableitung (29', 29", 29"') ein Schließventil (30', 30", 30"') eingeschaltet ist.

9. Vorrichtung nach Anspruch 8,
dadurch **gekennzeichnet,**
daß die Schließventile (30', 30", 30"') in Abhängigkeit von dem Lebensmittelfluidstand in dem Topf (11) schließbar sind.

10. Vorrichtung nach Anspruch 9,
dadurch **gekennzeichnet,**
daß eine Füllstandsmeßvorrichtung (31) für den Fluidstand im Topf (11) vorgesehen ist, welche die Schließventile (30', 30", 30"') steuert.

11. Vorrichtung nach einem der vorhergehenden Ansprüche,
dadurch **gekennzeichnet,**
daß mehrere, vorzugsweise zwei Töpfe (11) über jeweils einen eigenen Wärmetauscher (18) an eine gemeinsame Kühlvorrichtung (13) angeschlossen sind.

12. Vorrichtung nach Anspruch 11,
dadurch **gekennzeichnet,**
daß der Kühlmittelzulauf zu jedem Wärmetauscher (18) separat absperrbar ist.

13. Vorrichtung nach einem der vorhergehenden Ansprüche,
dadurch **gekennzeichnet,**
daß der Topf (11) Bestandteil
a. eines Creme-Kochers,
b. einer Pasteurisierungsvorrichtung oder
c. eine Speiseeismaschine ist.

## Claims

1. Fluid food cooling/heating apparatus comprising a pot (11) having a preferably right cylindrical or a rectangular cross-section, the sidewalls (11) of which and/or the base (11") of which stand in heat conducting contact with a tempering line arrangement (12) carrying a tempering fluid (14), the line arrangement being connected via supply and discharge lines (20, 21) to a tempering fluid circuit (12, 19, 20, 21) with a circulating arrangement (22) and a cooling apparatus (13) provided with a vaporiser (15), compressor (16) and condenser (17), which extracts the heat taken up from the pot (11) by the tempering fluid (14), characterized in that the vaporiser (15) is a component of a heat exchanger (18) which also has a passage arrangement (19) having an inlet (19') and an outlet (19") which stands in a heat-exchanging relationship with the vaporiser (15), with the inlet (19') of the passage arrangement being connected to the discharge line (21) and its outlet (19") being connected to the supply line (20), in that a heating device (23) is inserted in the tempering fluid circuit (12, 19, 20, 21) and can be switched on alternatively to the cooling apparatus (13) and in that the tempering line arrangement (12) consists of a plurality of temperature coil sections (12', 12", 12"', 12"", 12""') arranged above one another at the pot (11), which each have an inlet (26) and an outlet (27) and which are connected in parallel to the supply line (20) and to the discharge line (21) respectively.

2. Apparatus in accordance with claim 1, characterized in that the circulating pump arrangement (22) is inserted into the discharge line (21) or preferably into the supply line (20).

3. Apparatus in accordance with claim 1 or claim 2, characterized in that the heating apparatus (23) is inserted into the discharge line (21) or preferably into the supply line (20).

4. Apparatus in accordance with claim 2 and 3, characterized in that the heating apparatus (23) is inserted upstream of the circulating pump arrangement (22) into the supply line (20).

5. Apparatus in accordance with one of the preceding claims, characterized in that the heating apparatus (23) is inserted into the supply line (20) as close as possible to the transition from the supply line (20) into the tempering line arrangement (12).

6. Apparatus in accordance with one of the preceding claims, characterized in that in each case a tempering fluid distributor (25) is inserted between the supply line (20) and the inputs (26) of the tempering coil sections (12', 12", 12"', 12"", 12""') on the one hand, and/or the outputs (27) of the tempering coil sections (12', 12", 12"', 12"", 12""') and the discharge line (21).

7. Apparatus in accordance with one of the preceding claims, characterized in that the tempering fluid flow can be separately switched on and off for each tempering coil section (12', 12", 12"', 12"", 12""').

8. Apparatus in accordance with claim 7, characterized in that each tempering coil section (12', 12", 12"', 12"", 12""') has its own supply line (28', 28", 28"') and/or discharge line (29', 29", 29"') and in that a closing valve (30', 30", 30"') is inserted into each supply line (28', 28", 28"') and/or into each discharge line (29', 29", 29"').

9. Apparatus in accordance with claim 8, characterized in that the closing valves (30', 30", 30"') can be closed in dependence on the fluid food level in the pot (11).

10. Apparatus in accordance with claim 9, characterized in that a filled level measuring device (31) is provided for the fluid level in the pot (12) and controls the closing valves (30', 30", 30"').

11. Apparatus in accordance with one of the preceding claims, characterized in that a plurality of pots (11) and preferably two pots (11) are respectively connected via their own heat exchanger (18) to a common cooling apparatus (13).

12. Apparatus in accordance with claim 11, characterized in that the coolant supply to each heat exchanger (18) can be closed off separately.

13. Apparatus in accordance with one of the preceding claims, characterized in that the pot (11) is a component
a. of a cream boiler
b. of a pasteurising apparatus or
c. is an ice cream machine.

## Revendications

1. Dispositif de refroidissement et de chauffage d'aliment fluide comportant un récipient (11) présentant une section de préférence cylindrique, ou rectangulaire, dont les parois latérales (11') et/ou le fond (11'') sont en contact conducteur de chaleur avec un agencement (12) de conduits conduisant un fluide (14) de régulation de température, qui, par l'intermédiaire de conduits (20, 21) d'alimentation et d'évacuation est raccordé à un circuit (12, 19, 20, 21) de fluide de régulation de température comportant un agencement de pompe de circulation (22) et un dispositif de refroidissement (13) doté d'un évaporateur (15) d'un compresseur (16) et d'un condenseur (17), qui évacue, hors du récipient (11), la chaleur captée par le fluide (14) de régulation de température,
caractérisé en ce que
l'évaporateur (15) est une pièce constitutive d'un échangeur de chaleur (18) qui, en outre, contient un agencement (19) formant un canal, présentant une entrée (19') et une sortie (19''), qui est en liaison d'échange de chaleur avec l'évaporateur (15), dont l'entrée (19') est reliée au conduit d'évacuation (21) et dont la sortie (19'') est reliée au conduit d'alimentation (20), en ce qu'un dispositif de chauffage (23) susceptible d'être mis en service en alternance avec le dispositif de refroidissement (13) est inséré dans le circuit (12,19,21,21) de fluide de régulation de température et en ce que l'agencement (12) de conduits de régulation de température est constitué de plusieurs tronçons (12', 12'', 12''', 12'''', 12''''') de serpentins de régulation de température qui sont disposés les uns au-dessus des autres sur le récipient (11) et qui sont dotés chacun d'une entrée (26) et d'une sortie (27) qui sont raccordées en parallèle au conduit d'alimentation (20) ou respectivement au conduit d'évacuation (21).

2. Dispositif selon la revendication 1,
caractérisé en ce que
l'agencement (22) de pompe de circulation est inséré dans le conduit d'évacuation (21) ou, de préférence, dans le conduit d'alimentation (20).

3. Dispositif selon la revendication 1 ou 2,
caractérisé en ce que
le dispositif de chauffage (23) est inséré dans le conduit d'évacuation (21) ou, de préférence, dans le conduit d'alimentation (20).

4. Dispositif selon les revendications 2 et 3,
caractérisé en ce que
le dispositif de chauffage (23) est inséré dans le conduit d'alimentation (20) en aval de l'agencement (22) de pompe de circulation.

5. Dispositif selon l'une des revendications précédentes,
caractérisé en ce que
le dispositif de chauffage (23) est inséré dans le conduit d'alimentation (20) le plus près possible de la zone de transition entre le conduit d'alimentation (20) et l'agencement (12) de conduits de régulation de température.

6. Dispositif selon l'une des revendications précédentes,
caractérisé en ce qu'
un répartiteur (25) de fluide de régulation de température est inséré entre le conduit d'alimentation (20) et les entrées (26) des tronçons (12', 12", 12"', 12"", 12''''') de serpentins de régulation de température d'une part, et/ou d'autre part entre les sorties (27) des tronçons (12', 12", 12"', 12"", 12''''') de serpentins de régulation de température et le conduit d'évacuation (21).

7. Dispositif selon l'une des revendications précédentes,
caractérisé en ce que
le courant de fluide de régulation de température peut être branché ou débranché séparément pour chaque tronçon (12', 12", 12"', 12"", 12''''') de serpentin de régulation de température.

8. Dispositif selon la revendication 7,
caractérisé en ce que
chaque tronçon (12', 12", 12"', 12"", 12''''') de serpentin de régulation de température comporte un conduit d'arrivée propre (28', 28'', 28''') et/ou un conduit de sortie propre (29', 29'', 29''') et en ce qu'une valve de barrage (30', 30'', 30''') est montée dans chaque conduit d'arrivée (28', 28'', 28''') et/ou dans chaque conduit de sortie (29', 29", 29"').

9. Dispositif selon la revendication 8,
caractérisé en ce que
les valves de barrage (30', 30", 30''') peuvent être fermées en fonction de l'état du fluide alimentaire présent dans le récipient (11).

10. Dispositif selon la revendication 9,
caractérisé en ce qu'
un dispositif (31) de mesure de niveau de remplissage est prévu pour apprécier le niveau du fluide présent dans le récipient (11), lequel dispositif commande les valves de barrage (30', 30", 30"').

11. Dispositif selon l'une des revendications précédentes,
caractérisé en ce que
plusieurs, de préférence deux, récipients (11) sont raccordés à un dispositif de refroidissement commun (13) par l'intermédiaire d'un échangeur de chaleur (18) propre à chacun.

12. Dispositif selon la revendication 11,
caractérisé en ce que
l'alimentation en fluide de refroidissement peut être coupée séparément pour chaque échangeur de chaleur (18).

13. Dispositif selon l'une des revendications précédentes,
caractérisé en ce que
le récipient (11) est une partie constitutive
a. d'un dispositif de cuisson de crème
b. d'un dispositif de pasteurisation
ou c. d'une machine de fabrication de crème glacée.
